# EUROPEAN PATENT APPLICATION

(11) **EP 0 952 748 A1**
(43) Date of publication of application: **27.10.1999**
(21) Application number: 97940416.7
(22) Date of filing: 19.09.1997
(51) Int. Cl.: H04Q 7/38, H04Q 7/36, H04J 13/00

(54) **RADIO COMMUNICATION DEVICE AND METHOD**

(71) Applicant: Matsushita Electric Industrial Co., Ltd., Kadoma-shi Osaka-fu, 571 (JP)
(72) Inventor: KATSURA, Eiji, Kawasaki-shi Kanagawa 211 (JP); WATANABE, Masatoshi, Kanagawa 233-0008 (JP); KATO, Osamu, Kanagawa 237-0066 (JP)
(74) Representative: Grünecker, Kinkeldey, Stockmair & Schwanhäusser Anwaltssozietät
(86) International application number: JP9703322
(87) International publication number: WO9916279

(57) **Abstract**

A radio communication apparatus using a CDMA system as a multiple access system comprises a frame configuration control section for assigning identification information of the apparatus in call data to an information area having a shorter time than a frame, and a transmission control section for transmitting only a portion to which the identification information of the apparatus is assigned in the frame when requests a communication with a base station by random access.

## Description

### Technical Field

The present invention relates to a radio communication apparatus and method used in a car telephone, a portable telephone or the like.

### Background Art

In a cellular radio communication system for a car telephone, a portable telephone or the like, a multiple access system in which a plurality of stations communicate concurrently using the same frequency band has been applied. As this multiple access system, a frequency division multiple access (FDMA) system, a time division multiple access (TDMA) system and a code division multiple access (CDMA) system are known.

The CDMA system, one of those systems, is also called spread spectrum system because a signal subjected to the first modulation is further spread with a spreading code into a wide band (second modulation) to transmit. This system enables higher frequency utilization to be obtained and more system users to be accommodated than the FDMA system and the TDMA system.

In addition, a mobile station and a base station in the cellular radio system perform a bi-directional signal transmission using forward link and reverse link. AS a system for discriminating forward link and reverse link, there are primarily a frequency division duplex (FDD) system using different frequency bands in forward link and reverse link, and a time division duplex (TDD) system using the same frequency band to transmit forward link signals and reverse link signals with time slots.

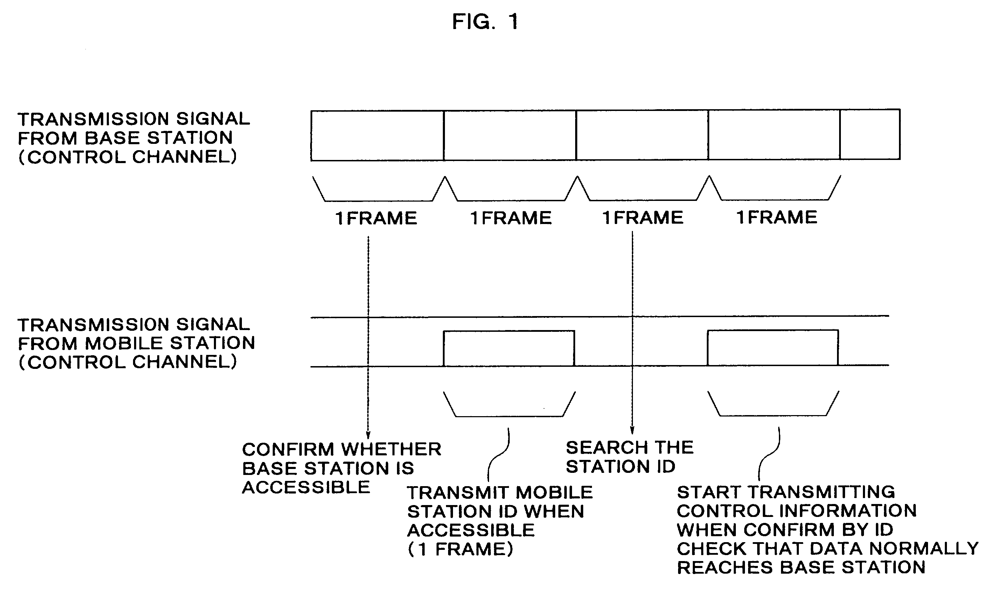

Data transmitting and receiving in a conventional radio communication apparatus will be described below using a timing diagram in FIG. 1.

When a conventional mobile station apparatus (hereinafter referred to as mobile station) in a radio communication starts communicating with a base station apparatus (hereinafter referred to as base station) in the radio communication, the mobile station first directs control information in random access transmitted from the base station, confirms whether or not the base station is in a callable condition, and when it is in the callable condition, performs a call to the base station and requires a radio channel. The call is performed by transmitting a single frame of data including identification information of the mobile station (hereinafter referred to as call data).

When the base station receives the call data, the base station transmits a signal including identification information on communicable mobile station.

The mobile station confirms whether or not the received data from the base station includes the identification information of the mobile station owns (hereinafter referred to as the station ID), and when it includes the station ID, the mobile station transmits transmission data to the base station to start communicating.

In the communication with the base station, when the mobile station transmits transmission data, the mobile station first performs coding of transmission data, and constructs the transmission data and control data into a frame configuration. The mobile station spectrum spreads the coded transmission data, converts the data into an analog signal, further converts the signal into a RF signal and controls transmission power to output from an antenna.

Since the maximum transmission power of a mobile station is set according to a cell with the maximum radius, the mobile station should reduce transmission power when the mobile station is present in a cell with a small radius or near a base station. Therefore, the base station determines transmission power of the mobile station side based on the reception result of transmission data from the mobile station, and includes transmission power control information (hereinafter referred to as TPC) in the transmission data to transmits to the mobile station. The mobile station extracts TPC from received data from the base station, and controls the transmission power of transmission data to be transmitted next.

In the CDMA system, it is possible to multiplex a plurality of channels in the same frequency, however the communication quality is deteriorated as the number of multiplexes is increased. Accordingly, interference to other apparatuses is increased corresponding to a time to transmit data, thereby resulting in a deterioration of communication quality of other channel.

Especially, it is difficult to control the transmission power of the call data since the call data is transmitted from a mobile station with no transmission power control information transmitted from a base station. Therefore, the call data has the possibility to become a large interference wave to other mobile stations, and to deteriorate the line communication quality largely.

### Disclosure of Invention

It is an object of the present invention to provide a radio communication apparatus and method capable of reducing interference to other mobile stations in call data and prevent the line communication quality from being deteriorated.

The object is achieved by a radio communication apparatus comprising a frame configuration control section for assigning identification information of the apparatus in call data to an information area having a shorter time than a single frame and a transmission control section for transmitting only the portion to which the identification information of the apparatus is assigned in the frame.

In addition, the transmission of the portion to which the identification information of the apparatus is assigned in the frame by the transmission control section is achieved by controlling transmission power except for the portion to which the identification information of the apparatus is assigned to 0.

### Brief Description of Drawings

FIG.1 is a timing diagram of data transmitting and receiving in a conventional radio communication apparatus;
FIG.2 is a block diagram illustrating a schematic configuration of a mobile station according to the present invention;
FIG.3 is a functional block diagram illustrating a schematic function of a control circuit of the mobile station according to the present invention;
FIG.4 is a timing diagram of data transmitting and receiving of a radio communication apparatus according to the present invention; and
FIG.5 is a flowchart illustrating a flow of processing of the control circuit of the mobile station according to the present invention.

### Best Mode for Carrying Out the Invention

An embodiment of the present invention will be described below with accompanying drawings. In addition, the embodiment of the present invention will describe about the case of using the CDMA system as a multiple access system and the TDD system as a system for discriminating forward link and reverse link.

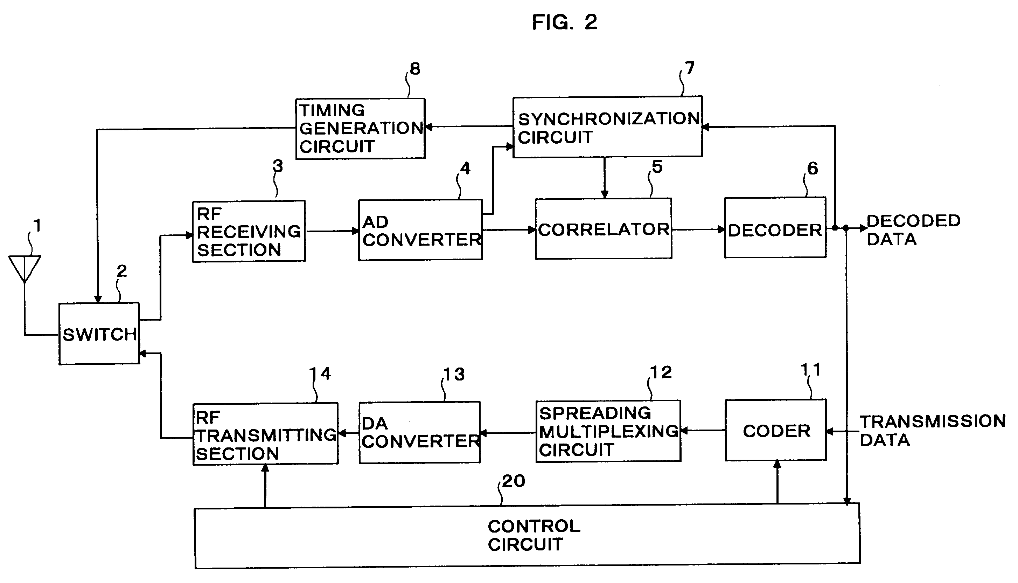

FIG.2 is a block diagram illustrating a configuration of a mobile station according to the embodiment of the present invention.

As illustrated in FIG.2, the mobile station comprises antenna 1 at which data is transmitted and received to and from a base station, switch 2 to switch time band for transmitting and receiving, RF receiving section 3 to convert the received data passed through switch 2 to baseband signals, AD converter 4 to convert the data converted at RF receiving section 3 into digital data, correlator 5 to despread the data converted at AD converter 4 with a spreading code and decoder 6 to decode the data despread at correlator 5.

Further, the mobile station according to the embodiment of the present invention comprises synchronization circuit 7 to generate synchronization signals used in despreading at correlator 5 using an output from AD converter 4 and generate frame synchronization signals using the decoded data, and timing generation circuit 8 to generate switching timing signals for switch 2 based on the frame synchronization signals output from synchronization circuit 7.

Furthermore, the mobile station according to the embodiment of the present invention comprises coder 11 to perform coding of transmission data, spreading multiplexing circuit 12 to spectrum spread the data coded at coder 11 and multiplex each channel, DA converter 13 to convert the data spread at spreading multiplexing circuit 12 to analog data, and RF transmitting section 14 to convert the data converted at DA converter 13 into RF data.

In addition, the mobile station according to the embodiment of the present invention comprises control circuit 20 to control the whole apparatus such as transmission power, frame configuration and so on.

The mobile station configured as descried above selects receiving or transmitting by switch 2 corresponding to a control signal output from timing generation circuit 8. In the case of selecting receiving, it decodes the data received from a base station using antenna 1, RF receiving section 3, AD converter 4, correlator 5, and decoder 6. On the other hand, in the case of selecting transmitting, it transmits transmission data to a base station using coder 11, spreading multiplexing circuit 12, DA converter 13, RF transmitting section 14 and antenna 1. The switching timing of switch 2 is provided from timing generation circuit 8 based on the frame synchronization signal generated at synchronization circuit 7. The control of each section in the mobile station is carried out by control circuit 20.

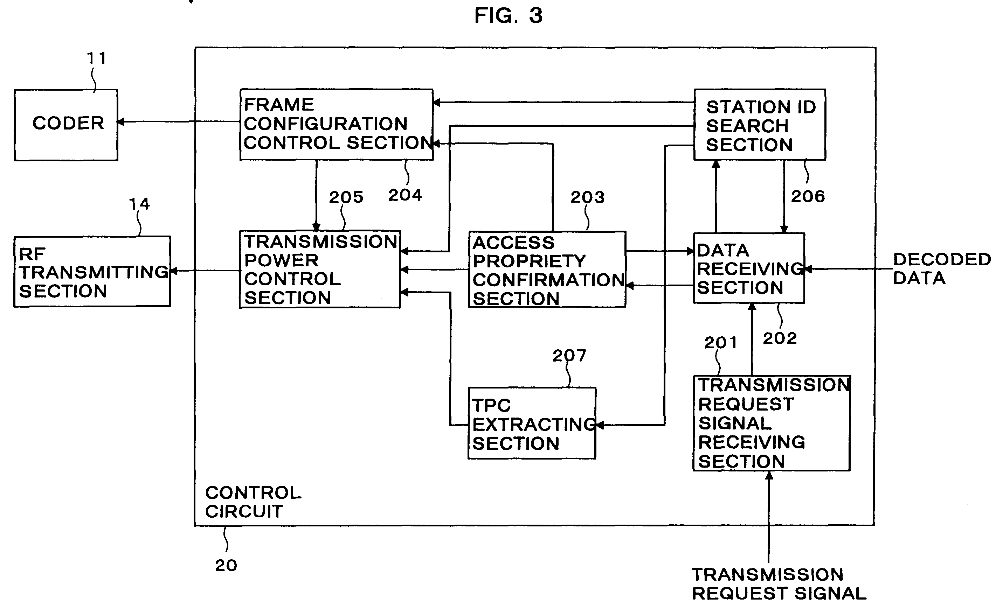

The schematic function of control circuit 20 in a mobile station according to this embodiment will be described with a block diagram in FIG.3.

Control circuit 20 primarily comprises transmission request signal receiving section 201 for receiving a transmission request signal, data receiving section 202 for receiving the decoded data, access propriety confirmation section 203 for confirming whether or not a base station is accessible using the decoded data, frame configuration control section 204 for transmitting a control signal to construct a frame configuration to coder 11, transmission power control section 205 for transmitting a control signal to control transmission power to RF transmitting section 14, station ID search section 206 for searching the station ID in decoded data, and TPC extracting section 207 for extracting TPC output from the base station from the decoded data.

When transmission request signal receiving section 201 receives the transmission request signal that is input to instruct by a user, the section 201 outputs this result to data receiving section 202.

Data receiving section 202 always directs control information on random access broadcast via a control channel from a base station, and outputs decoded data to access propriety confirmation section 203 when the section 202 obtains the transmission request. In addition, the section 202 outputs the decoded data to station ID search section 206 and TPC extracting section 207 when access propriety confirmation section 203 is decided that the base station is accessible. In addition, when the station ID confirmation section 206 does not confirm the station ID, the section 202 outputs the decoded data again to access propriety confirmation section 203 after a predetermined interval is passed.

Access propriety confirmation section 203 confirms whether or not a base station is in an accessible condition using the decoded data in call processing. When the base station is in the accessible condition, the section 203 outputs this result to data receiving section 202, frame configuration control section 204 and transmission power control section 205.

When the base station is in the accessible condition, frame configuration control section 204 transmits a control signal to coder 11 to control a frame configuration of call data so that the station ID is composed of data of a single burst in a frame.

When the call data is transmitted, transmission power control section 205 transmits a control signal to RF transmitting section 14 to control transmission power in order to transmit only a single burst. In other words, transmission power except for the burst containing the station ID is controlled to 0. When transmission data is transmitted, transmission power control section 205 transmits a control signal to RF transmitting section 14 to control transmission power of the transmission data based on TPC extracted at TPC extracting section 207.

Station ID search section 206 searches the station ID using the decoded data, and when confirms the station ID, outputs this result to frame configuration control section 204 and transmission power control section 205. On the other hand, when the section 206 does not confirm the station ID, the section 206 outputs the information to data receiving section 202.

TPC extracting section 207 extracts TPC from the decoded data and outputs the result to the transmission power control section.

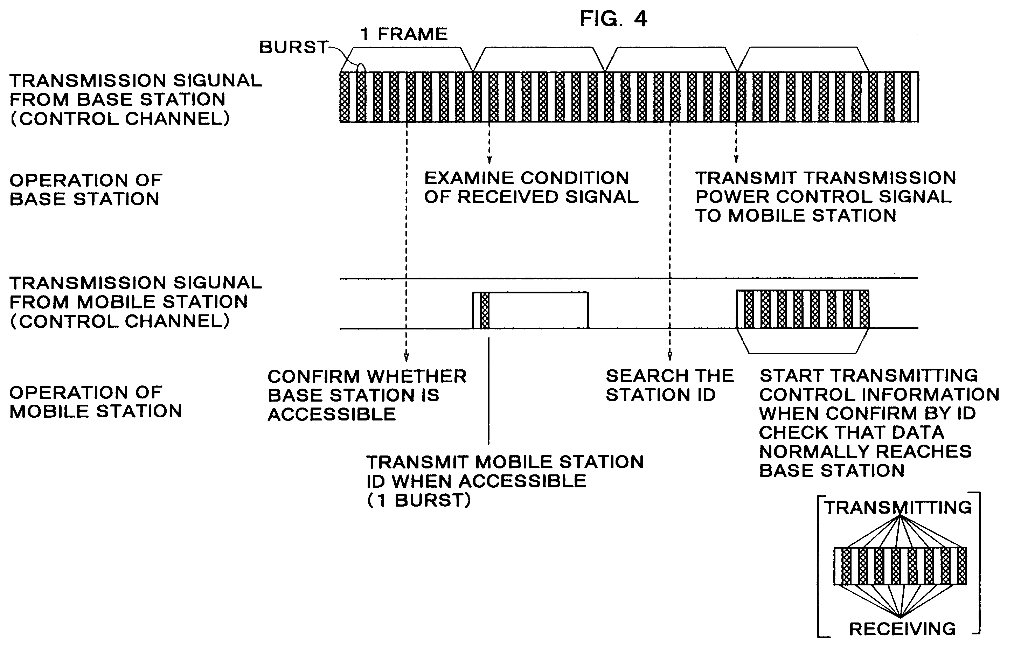

Data transmitting and receiving in a radio communication apparatus according to this embodiment will be described next with a timing diagram in FIG.4.

As illustrated in FIG.4, a base station transmits control information using eight bursts in a frame of a control channel, and a mobile station transmits information using a burst with the same time length in a frame assigned to transmitting. In addition, the base station and the mobile station transmit a burst in different time bands. In other words, when the base station transmits a burst, the mobile station performs receiving, and when the mobile station transmits a burst, the base station performs receiving.

With the transmission request signal input to a mobile station from a user, the mobile station directs control information on random access transmitted from a base station, and confirms whether or not it is in a callable condition to the base station.

When it is in the callable condition, the mobile station transmits call data to the base station to request a radio channel. The call data is composed of a single burst containing the station ID where the burst length is shorter than a frame.

As described above, since the mobile station according to this embodiment transmits the call data, which is transmission data before the line is established and has a difficult power control, using a single burst whose length is shorter than a frame, it is possible to reduce a time for providing interference against other mobile stations and to suppress a deterioration of communication quality.

The base station receives a signal of the single burst, and recognizes the ID of a mobile station communicable to each mobile station. The base station further examines the condition of the received data using the single burst signal, and transmits information to control transmission power of the mobile station when a communication with the mobile station is initiated.

After transmitting the station ID using the single burst, the mobile station directs the control information on random access of base station, and when confirms that the information contains the station ID, starts communicating with the base station. At this point, the mobile station reads the control information on transmission power transmitted from the base station to control transmission power in a communication of the control information.

According to the above processing, the mobile station is capable of performing communications of the remained control information in the condition where the transmission power is controlled. As a result, it is possible to reduce interference against other mobile stations also in transmitting transmission data.

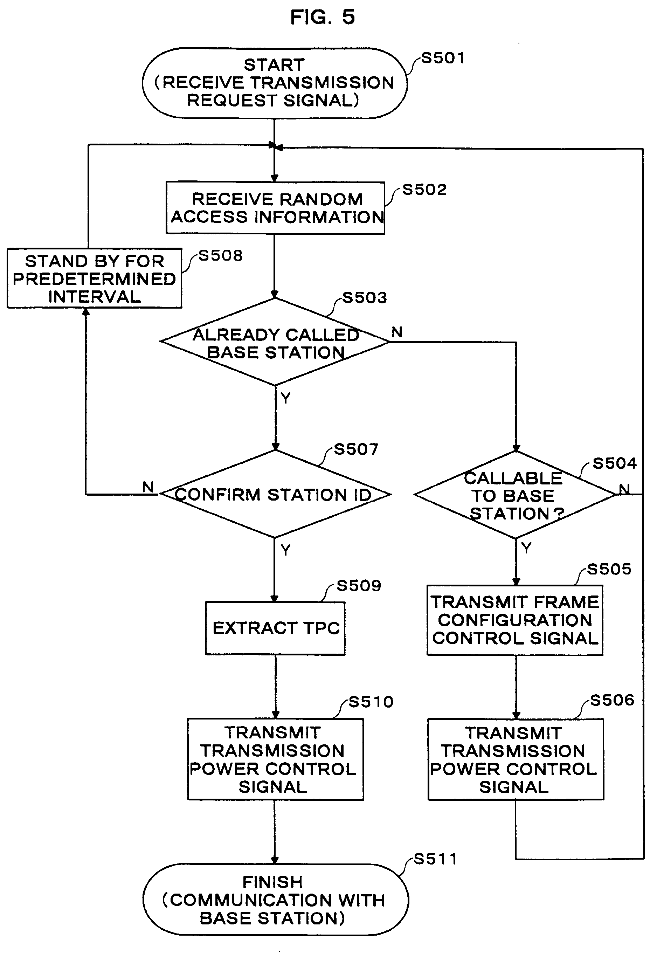

A flow of the processing of control circuit 20 in a mobile station according to this embodiment will be described next with a flowchart in FIG.5.

First, when transmission request signal receiving section 201 receives a transmission request signal that is input to instruct by a user, the section 201 outputs the signal to data receiving section 202 (S501).

Next, data receiving section 202 receives decoded data of control information on random access of a control channel of a base station (S502)

At this point, a section to which data receiving section 202 outputs is changed depending on whether or not the call is performed already to the base station (S503). When the call is not performed yet to the base station, the decoded data is output to access propriety confirmation section 203. Access propriety confirmation section 203 decides whether or not it is in a callable condition to the base station using the decoded received data (S504). When it is not in the callable condition, the steps from S502 to S504 are repeated.

On the other hand, when it is in the callable condition to the base station, frame configuration control section 204 transmits a control signal for frame configuration to assign the identification information of the mobile station to a shorter time than a frame to coder 11 (S505). Transmission power control section 205 transmits a control signal to control transmission power except for
the portion to which the identification information is assigned to 0 to RF transmitting section 14 (S506). According to the above processing, the call data is transmitted from RF transmitting section 14 to the base station through switch 2 and antenna 1.

When the call is already performed to the base station in the step of S503, the decoded data is output to station ID search section 206. Station ID search section 206 searches the station ID using the decoded received data (S507). When the station ID is not contained in the decoded data, the steps from S402 are repeated again after standing by for a predetermined interval (S508).

On the other hand, when the station ID is contained in the decoded data, TPC extracting section 207 extracts TPC from the decoded data (S509), and transmission power control section 205 transmits a control signal for transmission power control to RF transmitting section 14 (S510). According to the above processing, transmission data is transmitted from RF transmitting section 14 to the base station thorough switch 2 and antenna 1 and a communication with the base station is initiated (S511).

In addition, the above description is given to a CDMA/TDD system apparatus in which a frame is composed of a plurality of bursts, however it is possible to obtain the same effect in a CDMA/FDD system apparatus by making a call signal shorter than a frame.

As been apparent from the above description, the mobile station of the present invention is capable in a random access for call of reducing interference against other mobile stations and improving a line communication quality by making a length of call data shorter than a frame.

The mobile station is further capable of performing transmission power control of data to transmit by obtaining the transmission power control information using a call signal. As a result, the mobile station is capable of reducing interference against other mobile stations and improving a line communication quality from the first communication of control information.

### Industrial Applicability

The present invention enables a radio communication apparatus and method in a car telephone, portable telephone or the like appropriate to reduce interference against other mobile stations and prevent a line communication quality from being deteriorated.

The present invention is not limited to the above described embodiments, and various variations and modifications may be possible without departing from the scope of the present invention.

## Claims

1. A radio communication apparatus comprising:
frame configuration control means for assigning identification information of the apparatus in call data to an information area having a shorter time than a frame; and
transmission control means for transmitting only a portion to which said identification information of the apparatus is assigned in the frame.

2. A radio communication apparatus comprising:
frame configuration control means for assigning identification information of the apparatus in call data to at least one of plurality of bursts which are shorter than a frame; and
transmission control means for transmitting only a portion to which said identification information of the apparatus is assigned in the frame.

3. A radio communication apparatus according to claim 1, wherein transmission control means controls transmission power except for a portion to which identification information of the apparatus is assigned to 0.

4. A radio communication apparatus according to claim 1, wherein the transmission control means controls transmission power of first transmission data using transmission power control information from a base station apparatus based on the call data.

5. A base station apparatus, said apparatus receives call data, which is shorter than a frame, containing identification information of a mobile station apparatus from said mobile station apparatus and recognizes said mobile station apparatus transmitting said call data using only said call data.

6. A communication system according to a CDMA system, said communication system comprising:
a mobile station apparatus having frame configuration control means for assigning identification information of the apparatus in call data to an information area having a shorter time than a frame and transmission control means for transmitting only a portion to which said identification information of the apparatus is assigned in the frame; and
a base station apparatus according to claim 5, wherein a data communication is performed between said mobile station apparatus and said base station apparatus.

7. A communication system according to a CDMA system according to claim 6, wherein the data communication is performed between a mobile station apparatus and a base station apparatus using different frequency bands between reverse link and forward link.

8. A communication system according to a CDMA system according to claim 6, wherein the data communication is performed between a mobile station apparatus and a base station apparatus using a same frequency band in reverse link and forward link using time slots in the reverse link and forward link.

9. A radio communication method, wherein call data assigned to an information area having a shorter time than a frame is transmitted from a mobile station apparatus, and said call data is received at a base station apparatus to extract identification information of the mobile station apparatus from said call data.
